# EUROPEAN PATENT APPLICATION

(11) **EP 0 855 648 A2**
(43) Date of publication of application: **29.07.1998**
(21) Application number: 98300494.6
(22) Date of filing: 23.01.1998
(51) Int. Cl.: G06F 9/38

(54) **Data processing with parallel or sequential execution of program instructions**

(30) Priority: 24.01.1997 US 36223 P
(71) Applicant: TEXAS INSTRUMENTS INC., Dallas, Texas 75243 (US)
(72) Inventor: Simar, Laurence R., Richmond Texas 77469 (US); Seshan, Natarajan, Houston Texas 77063-1234 (US); Tatge, Reid E., Richmond Texas 77469 (US); Davis, Alan L., Sugarland Texas 77477 (US)
(74) Representative: Potter, Julian Mark

(57) **Abstract**

A data processing system 10 includes data processing circuitry 11 having circuitry (21, 23 and 25) for producing a set of instructions which include respective instruction portions for indicating whether the respective instructions can be executed simultaneously with another of the instructions. Program execution circuitry (29) receives the set of instructions and is selectively responsive to the instructive portions for executing simultaneously a plurality of the instructions indicated by the instruction portions.

## Description

This invention relates generally to data processing and, more particularly but not exclusively, to data processing with both parallel and sequential execution of program instructions.

Data processing systems and data processors are used in myriad applications which in turn have an impact on virtually every aspect of life. The utility of these myriad applications can ordinarily be enhanced by increasing the speed and throughput of the associated data processing systems and data processors.

One way to enhance speed and throughout is, where possible, to execute program instructions in parallel rather than in sequential fashion. One known approach in this regard is to utilize a special mode instruction which specifies parallel or sequential execution of program instruction. Another known approach in this regard is to use a mask to specify null instructions in a parallel type packet. Another known solution is to perform data processing in a parallel mode only.

Although the aforementioned techniques are capable of improving speed and throughput, they are nevertheless undesirably difficult to implement and disadvantageously costly in terms of processing overhead.

It is therefore desirable to provide for parallel execution of program instructions in a manner which reduces the implementational difficulties and processing overhead associated with the above-described approaches.

An object of a preferred embodiment of the present invention is to utilize a portion of a given program instruction to determine whether that instruction can be executed simultaneously with another program instruction.

In general, and in a form of the present invention, a data processing device is provided which has circuitry for producing a set of instructions which include instruction portions for indicating whether the respective instructions can be executed simultaneously with another of the instructions. The data processing circuitry includes program execution circuitry connected to the producing circuitry for receiving the set of instructions and selectively executing simultaneously a plurality of the instructions in response to indicator portions.

In another form of the present invention, a preferred embodiment comprises a method for operating a central processing unit (CPU) within a data processing device comprises the steps of: providing a set of instructions with respective instruction portions for indicating whether the respective instructions can be executed simultaneously; and determining from the instruction portions whether a plurality of the instructions can be executed simultaneously.

Other embodiments of the present invention will be evident from the description and drawings.

Embodiments in accordance with the present invention will now be further described by way of example, with reference to the accompanying drawings in which:
Fig. 1 is a block diagram of a data processing system according to the present invention;
Fig. 2 is a block diagram of a portion of the data processing circuitry of Fig. 1;
Fig. 3 illustrates the basic format of an instruction packet utilized in the present invention;
Fig. 4 is one example of an instruction packet according to the format of Fig. 3;
Fig. 5 illustrates the execution sequence defined by the instruction packet of Fig. 4;
Fig. 6 illustrates another example of an instruction packet according to the format of Fig. 3;
Fig. 7 illustrates the execution sequence defined by the instruction packet of Fig. 6;
Fig. 8 illustrates another example of an instruction packet according to the format of Fig. 3;
Fig. 9 illustrates the execution sequence defined by the instruction packet of Fig. 8;
Fig. 10 illustrates another example of an instruction packet according to the format of Fig. 3;
Fig. 11 illustrates the execution sequence defined by the instruction packet of Fig. 10;
Fig. 12 illustrates another example of an instruction packet according to the format of Fig. 3;
Fig. 13 illustrates the execution sequence defined by the instruction packet of Fig. 12;
Fig. 14 illustrates another example of an instruction packet according to the format of Fig. 3;
Fig. 15 illustrates the execution sequence defined by the instruction packet of Fig. 14;
Fig. 16 illustrates another example of an instruction packet according to the format of Fig. 3;
Fig. 17 illustrates the execution sequence defined by the instruction packet of Fig. 16;
Fig. 18 illustrates another example an instruction packet according to the format of Fig. 3;
Fig. 19 illustrates the execution sequence defined by the instruction packet of Fig. 18;
Figure 20 is a block diagram of a microprocessor which has an embodiment of the present invention;
Figure 21 is a block diagram of the execution units and register files of the microprocessor of Fig. 20;
Figure 22A is a chart which illustrates the processing phases of an instruction execution pipeline in the microprocessor of Fig. 20;
Figure 22B is a chart which illustrates the execution phases of the instruction execution pipeline in the microprocessor of Fig 20;
Figure 23 is a timing diagram which illustrates timing details of processing an instruction fetch packet during the processing phases of Fig. 22A and execution of the execution packet during the execution phases of Fig. 22B;
Figure 24 is a block diagram showing instruction dispatching in the microprocessor of Fig. 20;
Figure 25 illustrates the basic format of an instruction fetch packet for the microprocessor of Fig. 20; and
Figure 26 illustrates an 8-word fetch packet that is partially parallel.

Corresponding numerals and symbols in the different figures and tables refer to corresponding parts unless otherwise indicated.

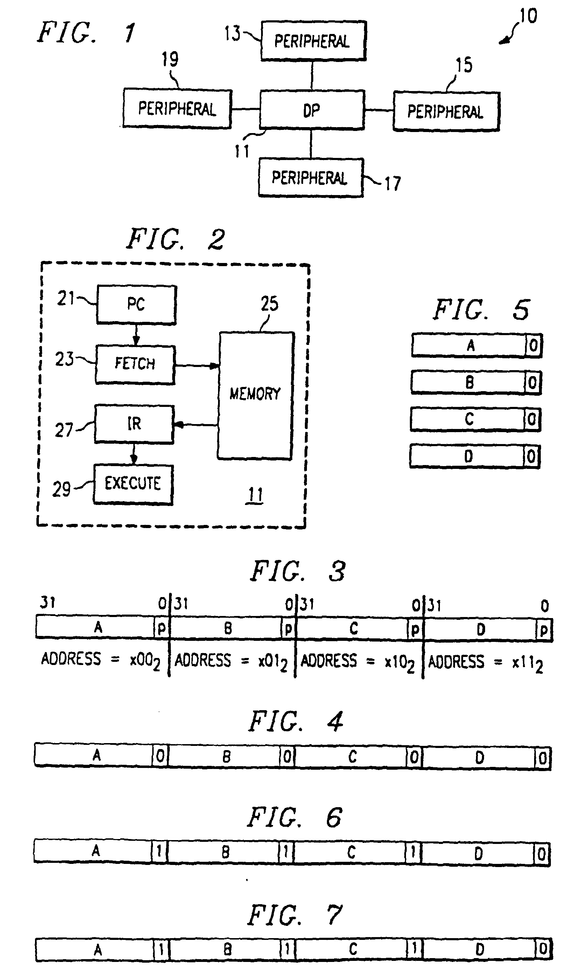

Fig. 1 is a block diagram of a data processing system 10 according to an exemplary embodiment of the present invention. The data processing system 10 includes data processing circuitry 11 and peripheral circuitries 13, 15, 17 and 19. In the exemplary embodiment of Fig. 1, the data processing circuitry 11 is connected to each of the peripheral circuitries 13, 15, 17 and 19 for transfer of information between data processing circuitry 11 and peripheral circuitries 13, 15, 17 and 19. However, and as will be apparent from the following description, a data processing system according to an embodiment of the present invention could include any quantity and type of peripheral circuitries and peripheral devices (such as peripherals 13,15, 17 and 19) interconnected among themselves and with data processing circuitry 11 in any manner heretofore or hereafter conceivable to workers in the art.

Fig. 2 illustrates a portion of one exemplary embodiment of the data processing circuitry 11 of Fig. 1. In Fig. 2, fetch circuitry 23 accesses memory 25 at an address specified by program counter 21 and causes an instruction packet at that address to be loaded into instruction register 27. Program execution circuitry 29 decodes and executes the instructions of the instruction packet held in instruction register 27.

Fig. 3 illustrates the basic format of the instruction packet fetched from memory 25. In the disclosed exemplary embodiment, an instruction packet includes four 32-bit instructions A, B, C and D. As shown in Fig. 3, instructions A, B, C and D are stored at consecutive addresses in memory 25. Thus, during normal sequential execution of program instructions, instruction A would be executed first, followed sequentially by instructions B, C and D.

Bit 0 of each instruction in Fig. 3 has been designated as a p-bit. The p-bits define how the instructions will be executed. The p-bits of the Fig. 3 instruction packet are inspected from left to right by the program execution circuitry 29. If the p-bit of a given instruction is equal to logic one, then the next sequential instruction in the packet is to be executed in parallel with the first-mentioned instruction. Program execution circuitry 29 applies this rule until an instruction in the instruction packet is reached with a p-bit equal to logic 0.

If a given instruction has a p-bit of 0, then the next sequential instruction is executed sequentially after the given instruction (and after any instructions which are executed in parallel with the given instruction) . The program execution circuitry 29 applies this rule until it reaches an instruction in the instruction packet with a p-bit of logic 1.

Figs. 4-19 provide application examples of the above-described p-bit rules.

Fig. 4 illustrates an instruction packet in which all p-bits are 0. Thus, instructions A-D are executed sequentially as shown in Fig. 5.

Fig. 6 illustrates an instruction packet in which the p-bits of instructions A, B and C are equal to 1, and the p-bit of instruction D is 0. Thus, instructions A, B, C and D are executed simultaneously, that is, in parallel as shown in Fig. 7.

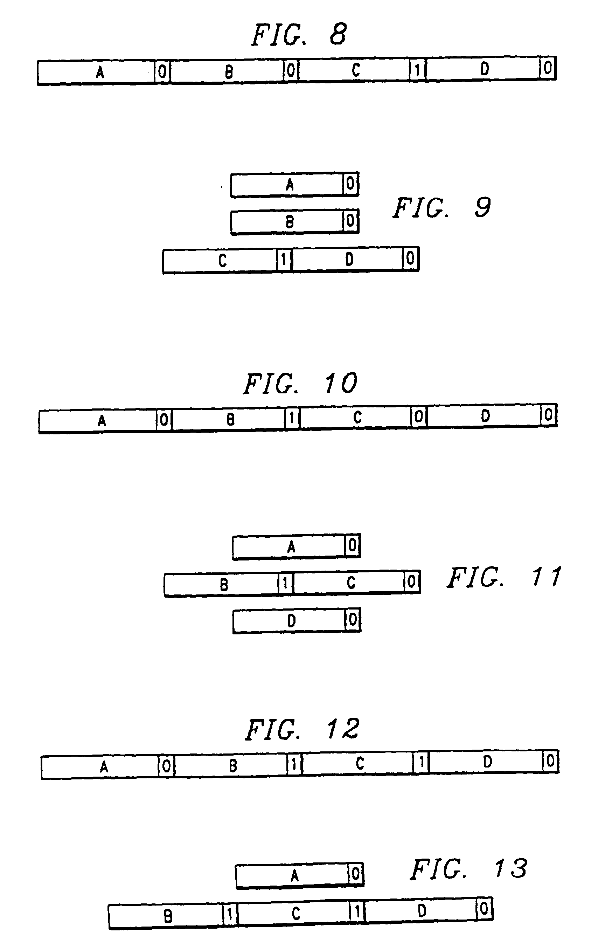

In the instruction of Fig. 8, only the p-bit of instruction C is set to one, resulting in the execution sequence of Fig. 9, namely, instructions A and B are executed sequentially, followed by instructions C and D which are executed in parallel.

In the instruction packet of Fig. 10, only the p-bit of instruction B is set to one, resulting in the execution sequence shown in Fig. 11, namely instruction A is executed and then followed sequentially by the parallel execution of instructions B and C, which is then followed sequentially by execution of instruction D.

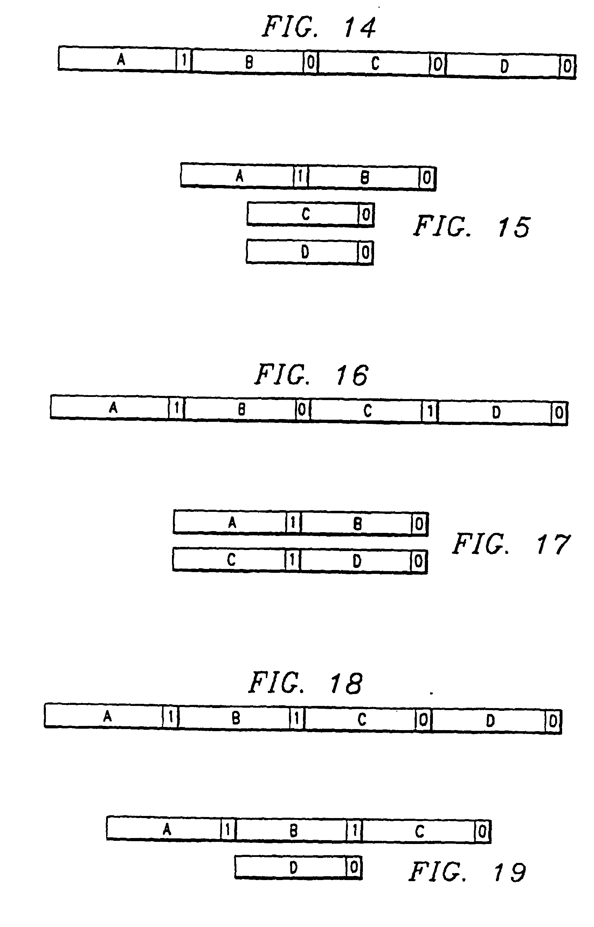

In the instruction packet of Fig. 12, the p-bits of instructions B and C are set to one, and the p-bits of instructions A and D are zero. This results in the instruction sequence shown in Fig. 13, namely instruction A is executed and is then sequentially followed by the parallel execution of instructions B, C and D.

In the instruction packet of Fig. 14, only the p-bit of instruction A is set to logic one, resulting in the execution sequence shown in Fig. 15, namely instructions A and B are executed in parallel and then followed sequentially by the execution of instruction C and then the execution of instruction D.

In the instruction packet of Fig. 16, the p-bits of instructions A and C are set to one and the p-bits of instructions B and D are 0, resulting in the execution sequence illustrated in Fig. 17, namely the parallel execution of instructions A and B followed sequentially by the parallel execution of instructions C and D.

In the instruction packet of Fig. 18, the p-bits of instructions A and B are set to 1 and the p-bits of instructions C and D are 0. This results in the execution sequence illustrated in Fig. 19, namely instructions A, B and C are executed in parallel and then followed sequentially by execution of instruction D.

Because the instruction packet in the disclosed example includes 4 program instructions, the program compiler can always provide instruction D (the fourth instruction) with a p-bit of 0. The compiler determines the values of the remaining p-bits of instructions A, B and C based on the propriety of executing instructions A and B in parallel, the propriety of executing instructions B and C in parallel, and the propriety of executing instructions A, B and C in parallel. For example, if execution of instruction B requires a result provided by execution of instruction A, then the compiler would provide instruction A with a p-bit of 0 so that instruction B would be executed sequentially after instruction A. As another example, if instructions B and C access the same register, then the compiler would provide instruction B with a p-bit of 0 to ensure that instructions B and C are executed sequentially rather than in parallel.

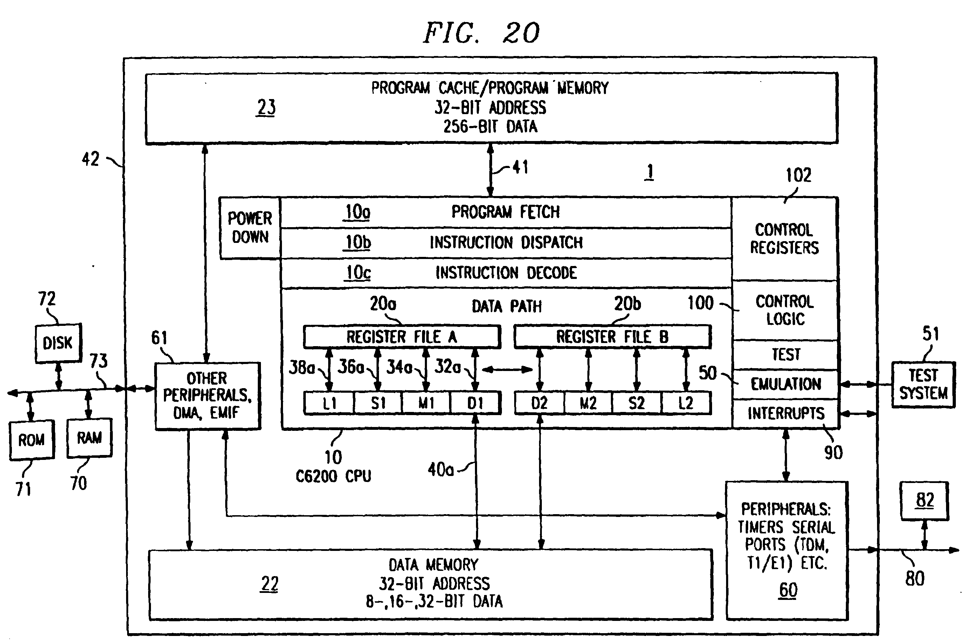

Figure 20 is a block diagram of a microprocessor 1 which has an embodiment of the present invention. Microprocessor 1 is a VLIW digital signal processor ("DSP"). In the interest of clarity, Figure 20 only shows those portions of microprocessor 1 that are relevant to an understanding of an embodiment of the present invention. Details of general construction for DSPs are well known, and may be found readily elsewhere. For example, U.S. Patent 5,072,418 issued to Frederick Boutaud, et al, describes a DSP in detail and is incorporated herein by reference. U.S. Patent 5,329,471 issued to Gary Swoboda, et al, describes in detail how to test and emulate a DSP and is incorporated herein by reference. Details of portions of microprocessor 1 relevant to an embodiment of the present invention are explained in sufficient detail hereinbelow, so as to enable one of ordinary skill in the microprocessor art to make and use the invention.

In microprocessor 1 there are shown a central processing unit (CPU) 10, data memory 22, program memory 23, peripherals 60 and an external memory interface (EMIF) with a direct memory access (DMA) 61. CPU 10 further has an instruction fetch/decode unit 10a-c , a plurality of execution units, including an arithmetic and load/store unit D1, a multiplier M1, an ALU/shifter unit S1, an arithmetic logic unit ("ALU") L1, a shared multiport register file 20a from which data are read and to which data are written. Decoded instructions are provided from the instruction fetch/decode unit 10a-c to the functional units D1, M1, S1, and L1 over various sets of control lines which are not shown. Data are provided to/from the register file 20a from/to to load/store units D1 over a first set of busses 32a, to multiplier M1 over a second set of busses 34a, to ALU/shifter unit S1 over a third set of busses 36a and to ALU L1 over a fourth set of busses 38a. Data are provided to/from the memory 22 from/to the load/store units D1 via a fifth set of busses 40a. Note that the entire data path described above is duplicated with register file 20b and execution units D2, M2, S2, and L2. Instructions are fetched by fetch unit 10a from instruction memory 23 over a set of busses 41. Emulation unit 50 provides access to the internal operation of integrated circuit 1 which can be controlled by an external test system 51.

Note that the memory 22 and memory 23 are shown in Figure 20 to be a part of a microprocessor 1 integrated circuit, the extent of which is represented by the box 42. The memories 22-23 could just as well be external to the microprocessor 1 integrated circuit 42, or part of it could reside on the integrated circuit 42 and part of it be external to the integrated circuit 42. Also, an alternate number of execution units can be used.

When microprocessor 1 is incorporated in a data processing system, additional memory or peripherals may be connected to microprocessor 1, as illustrated in Figure 1. For example, Random Access Memory (RAM) 70, a Read Only Memory (ROM) 71 and a Disk 72 are shown connected via an external bus 73. Bus 73 is connected to the External Memory Interface (EMIF) which is part of functional block 61 within microprocessor 42. A Direct Memory Access (DMA) controller is also included within block 61. The DMA controller is generally used to move data between memory and peripherals within microprocessor 1 and memory and peripherals which are external to microprocessor 1.

Several example systems which can benefit from aspects of embodiments of the present invention are described in U.S. Patent 5,072,418, which was incorporated by reference herein, particularly with reference to Figures 2-18 of U.S. Patent 5,072,418. A microprocessor incorporating an aspect of an embodiment of the present invention to improve performance or reduce cost can be used to further improve the systems described in U.S. Patent 5,072,418. Such systems include, but are not limited to, industrial process controls, automotive vehicle systems, motor controls, robotic control systems, satellite telecommunication systems, echo canceling systems, modems, video imaging systems, speech recognition systems, vocoder-modem systems with encryption, and such.

A description of various architectural features of the microprocessor of Fig. 20 is provided in coassigned application serial number (TI docket number T-25311). A description of a complete set of instructions for the microprocessor of Fig. 20 is also provided in coassigned application serial number (TI docket number T-25311).

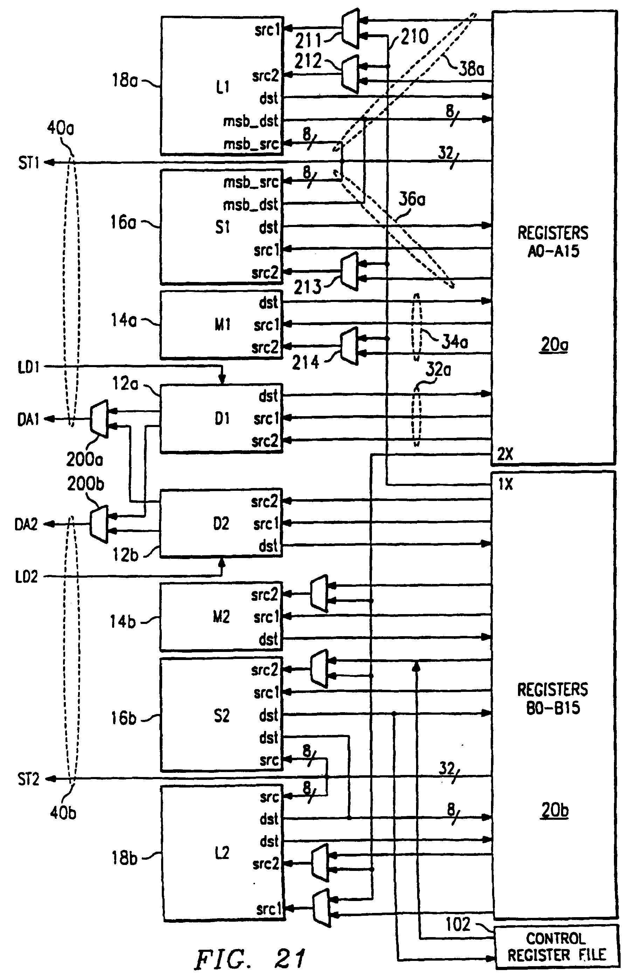

Figure 21 is a block diagram of the execution units and register files of the microprocessor of Fig. 20 and shows a more detailed view of the buses connecting the various functional blocks. In this figure, all data busses are 32 bits wide, unless otherwise noted. Bus 40a has an address bus DA1 which is driven by mux 200a. This allows an address generated by either load/store unit D1 or D2 to provide an address for loads or stores for register file 20a. Data Bus LD1 loads data from an address in memory 22 specified by address bus DA1 to a register in load unit D1. Unit D1 may manipulate the data provided prior to storing it in register file 20a. Likewise, data bus ST1 stores data from register file 20a to memory 22. Load/store unit D1 performs the following operations: 32-bit add, subtract, linear and circular address calculations. Load/store unit D2 operates similarly to unit D1, with the assistance of mux 200b for selecting an address.

ALU unit L1 performs the following types of operations: 32/40 bit arithmetic and compare operations; left most 1, 0, bit counting for 32 bits; normalization count for 32 and 40 bits; and logical operations. ALU L1 has input src1 for a 32 bit source operand and input src2 for a second 32 bit source operand. Input msb_src is an 8 bit value used to form 40 bit source operands. ALU L1 has an output dst for a 32 bit destination operands. Output msb_dst is an 8 bit value used to form 40 bit destination operands. Two 32 bit registers in register file 20a are concatenated to hold a 40 bit operand. Mux 211 is connected to input src1 and allows a 32 bit operand to be obtained from register file 20a via bus 38a or from register file 20b via bus 210. Mux 212 is connected to input src2 and allows a 32 bit operand to be obtained from register file 20a via bus 38a or from register file 20b via bus 210. ALU unit L2 operates similarly to unit L1.

ALU/shifter unit S1 performs the following types of operations: 32 bit arithmetic operations; 32/40 bit shifts and 32 bit bit-field operations; 32 bit logical operations; branching; and constant generation. ALU S1 has input src1 for a 32 bit source operand and input src2 for a second 32 bit source operand. Input msb_src is an 8 bit value used to form 40 bit source operands. ALU S1 has an output dst for a 32 bit destination operands. Output msb_dst is an 8 bit value used to form 40 bit destination operands. Mux 213 is connected to input src2 and allows a 32 bit operand to be obtained from register file 20a via bus 36a or from register file 20b via bus 210. ALU unit S2 operates similarly to unit S1, but can additionally perform register transfers to/from the control register file 102.

Multiplier M1 performs 16 x 16 multiplies. Multiplier M1 has input src1 for a 32 bit source operand and input src2 for a 32 bit source operand. ALU S1 has an output dst for a 32 bit destination operands. Mux 214 is connected to input src2 and allows a 32 bit operand to be obtained from register file 20a via bus 34a or from register file 20b via bus 210. Multiplier M2 operates similarly to multiplier M1.

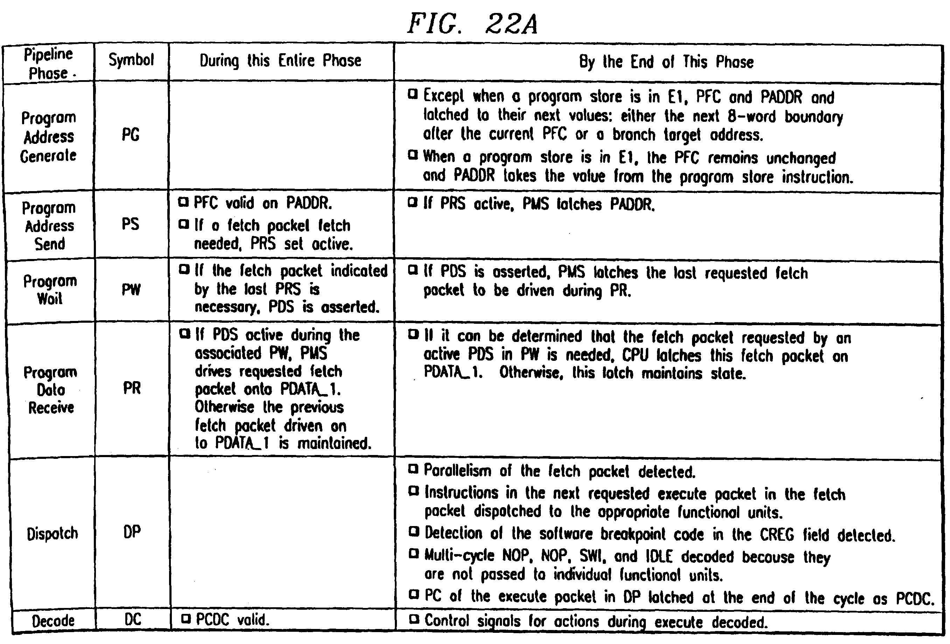

Figure 22A is a chart which illustrates the processing phases of an instruction execution pipeline in the microprocessor of Fig. 1. Each phase corresponds roughly to a clock cycle of a system clock. For example, if microprocessor 1 is being operated at 200 MHz, then each phase is nominally 5 Ns. However, in a phase where data is expected from a memory or peripheral, such as RAM 70, the pipeline will stall if the data is not ready when expected. When stalled, a given pipeline phase will exist for a number of system clock cycles.

In Figure 22A, the first phase of processing an instruction is to generate the program address in phase PG. This is done by loading a program fetch counter PFC which is located in control register file 102. During the second instruction processing phase PS, an address of an instruction fetch packet is sent to program memory 23 via a program address bus PADDR which is part of bus 41. The third phase PW is a wait phase to allow for access time in memory 23. During the fourth phase PR, a program fetch packet is available from program memory 23 via data bus PDATA_I which is part of bus 41. During the fifth processing phase DP, instruction parallelism is detected and instructions that can be executed are dispatched to the appropriate functional units. This aspect of pipeline operation will be described in more detail in later paragraphs. During the sixth processing phase DC, executable instructions are decoded and control signals are generated to control the various data paths and functional units.

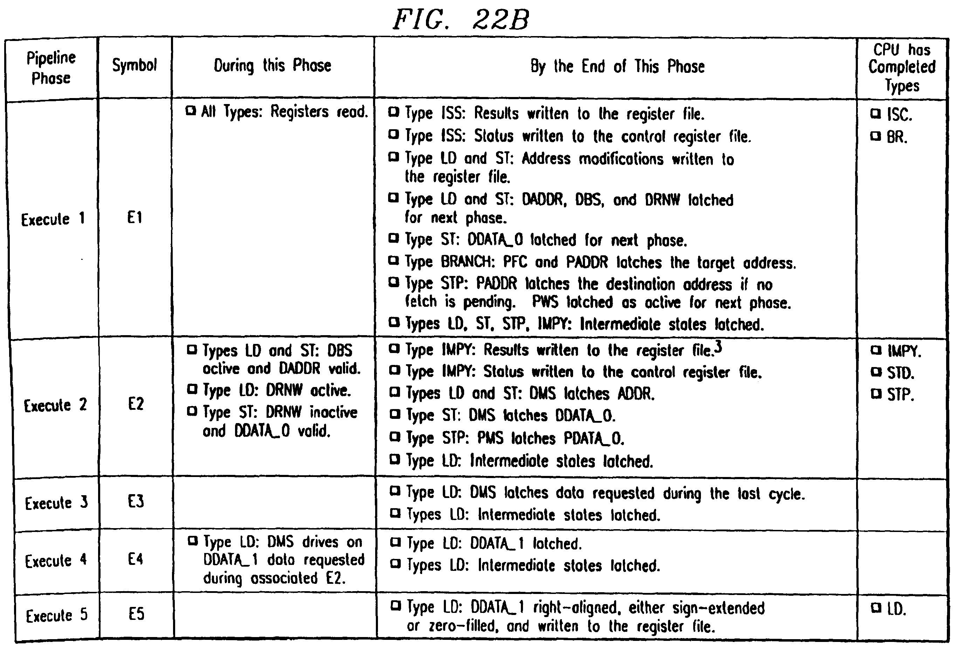

Figure 22B is a chart which illustrates the execution phases of the instruction execution pipeline in the microprocessor of Fig 1. During the first execution phase E1, single cycle instructions, referred to as "ISC", and branch instructions, referred to as "BR", are completed. A designated execution unit performs the operations indicated in Fig. 22B as directed by control circuitry 100. During the second execution phase E2, the following types of instructions are completed by designated execution units under control of control circuitry 100: integer multiply (IMPY), program store instructions (STP), and data store instructions (STD). During the third execution phase E3, execution of load data instructions (LD) continues by latching data from the data memory system (DMS), as indicated. During execution phase E4, the data latched in E3 is transferred to a data input register DDATA_I in execution unit D1 or D2. During execution phase E5, the LD instruction is completed by manipulating the data in register DDATA_I and writing the manipulated data to a specified register in register file 20a or 20b.

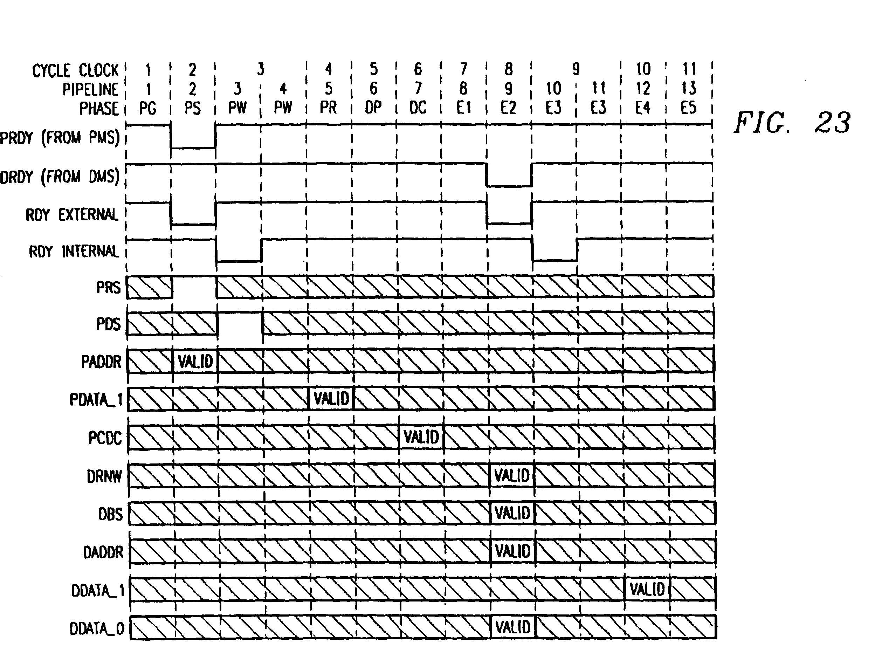

Figure 23 is a timing diagram which illustrates timing details of processing an instruction fetch packet during the processing phases of Fig. 22A and execution of the execution packet during the execution phases of Fig. 22B. Note that a pipe stall is illustrated in phase PW due to a program memory ready signal PRDY being low in phase PS, and a second pipe stall in phase E3 due a data memory ready signal DRDY being low in phase E2.

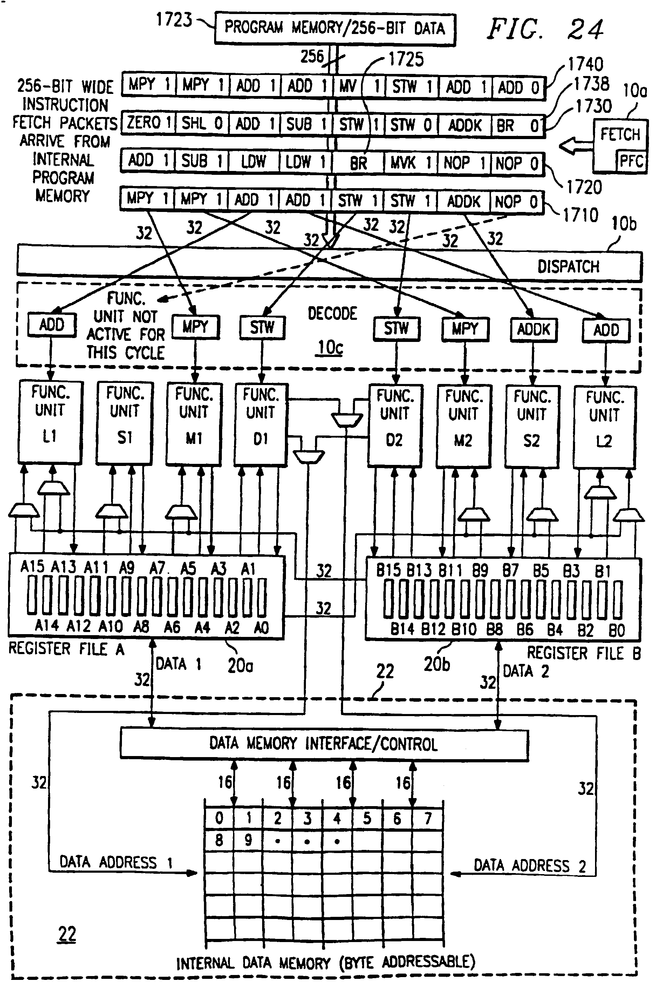

Figure 24 is a block diagram showing instruction dispatching in the microprocessor of Fig. 20. In this embodiment, an instruction fetch packet contains eight instructions. Instruction fetch packet 1710 is dispatched and decoded to eight execution units as illustrated. Fetch packet 1720 contains a branch instruction 1725. Instruction fetch packet 1730 contains three instruction execute packets. The first execute packet contains two instructions, ZERO-SHL, which will begin processing in the first delay slot of branch instruction 1725. The second execute packet contains four instruction, ADD-SUB-STW-STW, which will begin processing in the second delay slot of branch instruction 1725. The third execute packet contains two instructions, ADDK-BR, which will begin processing in the third delay slot of branch instruction 1725.

### Parallel Operations

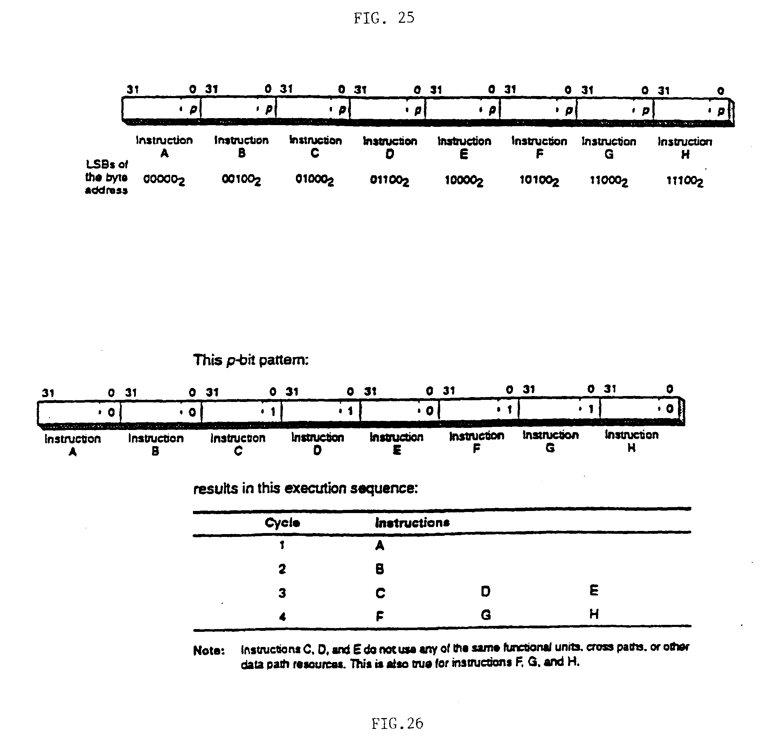

Instructions are always fetched eight at a time. This constitutes a fetch packet. The basic format of a fetch packet is shown in Figure 25. The execution grouping of the fetch packet is specified by the p-bit, bit zero, of each instruction. Fetch packets are 8-word aligned.

The p bit controls the parallel execution of instructions. The p-bits are scanned from left to right (lower to higher address). If the p bit of instruction i is 1, then instruction i + 1 is to be executed in parallel with (in the same cycle as) instruction i. If the p-bit of instruction i is 0, then instruction i + 1 is executed in the cycle after instruction I. All instructions executing in parallel constitute an execute packet. An execute packet can contain up to eight instructions. All instructions in an execute packet must use a unique functional unit.

An execute packet cannot cross an 8-word boundary. Therefore, the last p-bit in a fetch packet is always set to 0, and each fetch packet starts a new execute packet. As discussed with regard to Figures 4-19, there are three types of p-bit patterns for fetch packets. These three p-bit patterns result in the following execution sequences for the eight instructions: Fully serial, Fully parallel, Partially serial.

### Example Parallel Code

The || characters signify that an instruction is to execute in parallel with the previous instruction. In the fetch packet of Figure 26, the code would be represented as this:

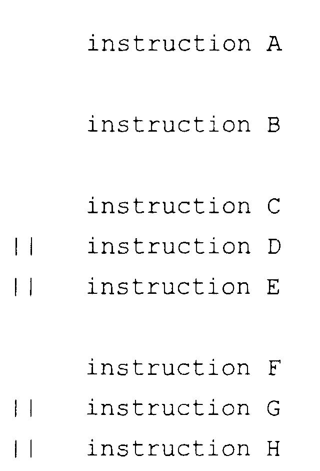

Branching Into the Middle of an Execute Packet

If a branch into the middle of an execution packet occurs, all instructions at lower addresses are ignored. In the example in Figure 26, if a branch to the address containing instruction D occurs, then only D and E will execute. Even though instruction C is in the same execute packet, it is ignored. Instructions A and B are also ignored because they are in earlier execute packets. Resource Constraints

No two instructions within the same execute packet can use the same resources. Also, no two instructions can write to the same register during the same cycle. The following sections describe each of the resources an instruction can use.

### Functional Units

Two instructions using the same functional unit cannot be issued in the same execute packet.

The following execute packet is invalid: 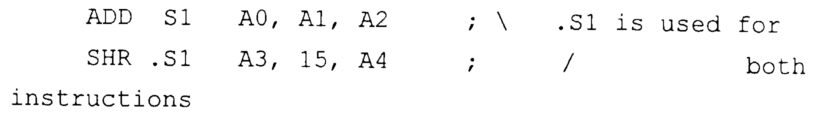 The following execute packet is valid:

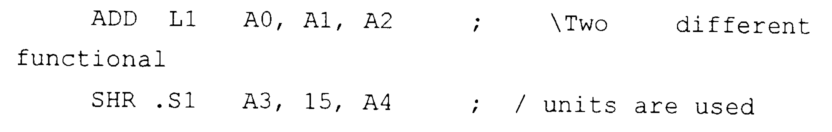

### Cross Paths (1X and 2X)

One unit (either a .S, .L, or .M) per data path, per execute packet, can read a source operand from its opposite register file via the cross paths (1X and 2X). For example, .S1 can read both operands from the A register file, or one operand from the B register file using the 1X cross path. This is denoted by an X following the unit name.

Two instructions using the same X cross path between register files cannot be issued in the same execute packet since there is only one path from A to B and one path from B to A.
The following execute packet is invalid:

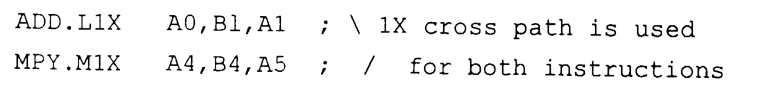

The following execute packet is valid:

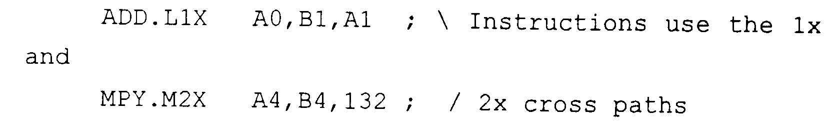

The operand will come from a register file opposite of the destination if the x bit in the instruction field is set.

### Load and Store Path

Loads and stores can use an address pointer from one register file while loading to or storing from the other register file. Two loads and/or stores using an address pointer from the same register file cannot be issued in the same execute packet.
The following execute packet is invalid: 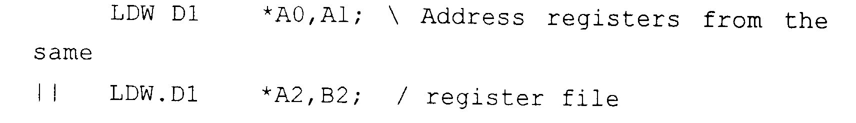 The following execute packet is valid:

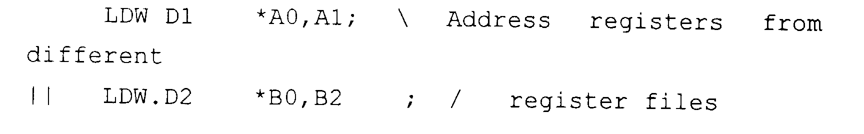

Two loads and/or stores loading to and/or storing from the same register file cannot be issued in the same execute packet.

The following execute packet is invalid:

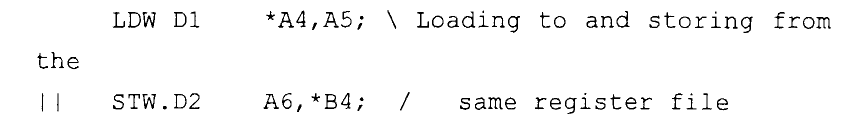

The following execute packet is valid:

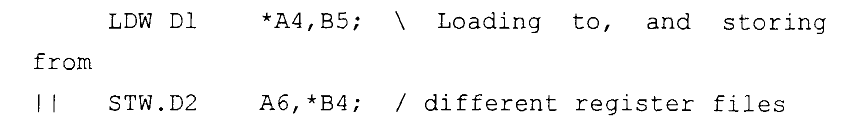

### Long Paths

Only one long result may be written per cycle on each side of the register file. Because the S and .L units share a read register port for long source operands and a write register port for long results, only one may be issued per side in an execute packet.

The following execute packet is invalid:

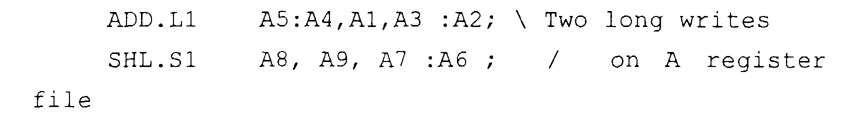

The following execute packet is valid:

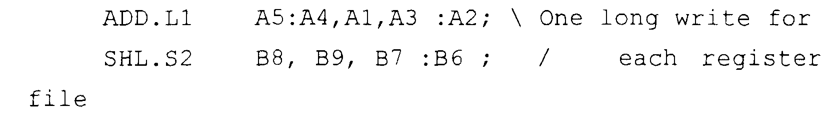

Because the .L and .S units share their long read port with the store port, operations that read a long value cannot be issued on the .L and/or .S units in the same execute packet as a store.

The following execute packet is invalid: 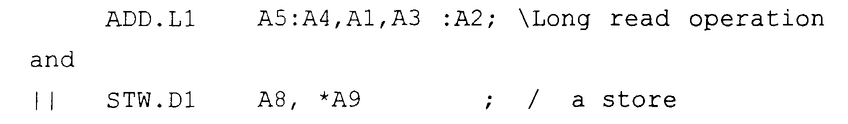 The following execute packet is valid:

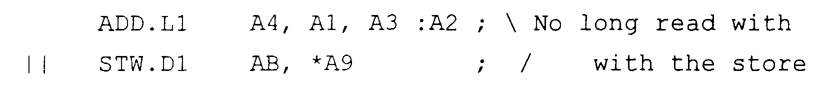

### Register Reads

More than four reads of the same register cannot occur on the same cycle. Conditional registers are not included in this count.

The following code sequence is invalid:

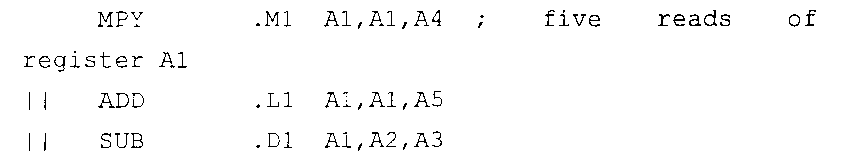

Whereas this code sequence is valid:

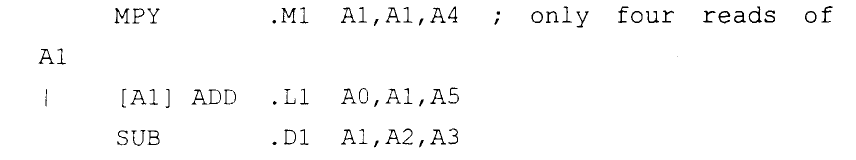

### Register Writes

Multiple writes to the same register on the same cycle can occur if instructions with different latencies writing to the same register are issued on different cycles. For example, an MPY issued on cycle i followed by an ADD on cycle i+1 cannot write to the same register since both instructions will write a result on cycle i+1. Therefore, the following code sequence is invalid:

| | | |
|---|---|---|
| MPY | .M1 | A0,A1,A2 |
| ADD | .L1 | A4,A5,A2 |

### Detectability of Write Conflicts

The following sequence of execute packets shows different multiple write conflicts. For example, the ADD and SUB in execute packet L1 write to the same register. This conflict is easily detectable.

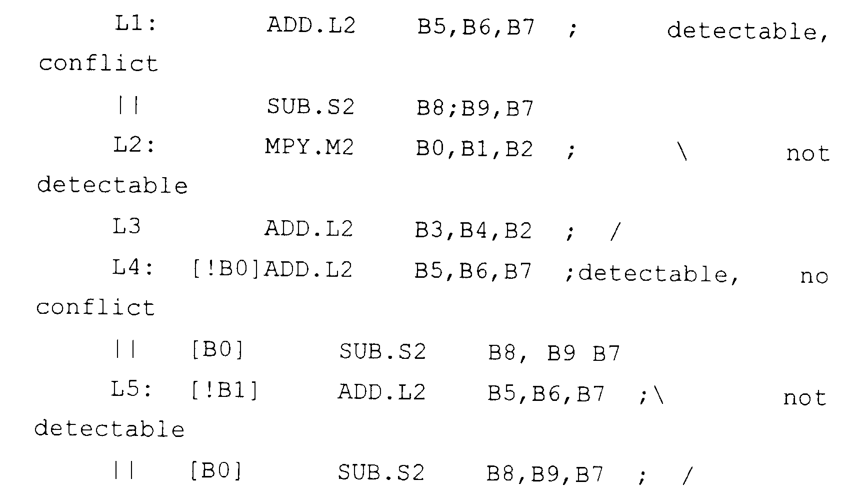

The MPY in packet L2 and the ADD in packet L3 might both write to B2 simultaneously; however, if a branch instruction causes the execute packet after L2 to be something other than L3, this would not be a conflict. Thus, the potential conflict in L2 and L3 might not be detected by the assembler. The instructions in L4 do not constitute a write conflict because they are mutually exclusive. In contrast, because it is not obvious that the instructions in L5 are mutually exclusive, the assembler cannot determine a conflict. If the pipeline does receive commands to perform multiple writes to the same register, the result is undefined.

Although exemplary embodiments of the present invention are described above, this does not limit the scope of the invention, which can be practiced in a variety of embodiments.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims in any appropriate manner and not merely in specific combinations enumerated in the claims.

## Claims

1. A data processing system, comprising:
data processing circuitry having circuitry for producing a set of instructions which include respective instruction portions for indicating whether the respective instructions can be executed simultaneously with another of the instructions; and
said data processing circuitry including program execution circuitry connected to said producing circuitry for receiving the set of instructions and selectively responsive to said instruction portions for executing simultaneously a plurality of said instructions indicated by said instruction portions.

2. A method of processing program instructions in a data processing system, comprising the steps of:
providing a set of instructions with respective instruction portions for indicating whether the respective instructions can be executed simultaneously with another of the instructions; and
determining from said instruction portions whether a plurality of said instructions can be executed simultaneously.

3. A method of compiling a program for execution by a data processing system, comprising the steps of:
determining whether a first program instruction can be executed simultaneously with a second program instruction that immediately sequentially follows the first program instruction in program; and
providing the first instruction with an instruction portion that indicates whether the first instruction can be executed simultaneously with the second instruction.
